# EUROPÄISCHE PATENTSCHRIFT

(11) **EP 2 649 708 B1**
(45) Veröffentlichungstag und Bekanntmachung des Hinweises auf die Patenterteilung: **04.08.2021**
(21) Anmeldenummer: 11799366.7
(22) Anmeldetag: 05.12.2011
(51) Int. Cl.: H02K 7/116

(54) **KÜHLANORDNUNG UND GETRIEBEMOTOR**
COOLING ARRANGEMENT AND GEARED MOTOR
DISPOSITIF DE REFROIDISSEMENT ET MOTORÉDUCTEUR

(30) Priorität: 09.12.2010 DE 102010054028
(43) Veröffentlichungstag der Anmeldung: 16.10.2013
(73) Patentinhaber: SEW-EURODRIVE GmbH & Co. KG, 76646 Bruchsal (DE)
(72) Erfinder: BARTON, Peter, 75015 Bretten (DE); DIETRICH, Stefan, 76149 Karlsruhe (DE); DITTES, Gerhard, 75053 Gondelsheim (DE); DOPPELBAUER, Martin, 75015 Bretten (DE); HAUCK, Matthias, 68723 Schwetzingen (DE); HAUG, Michael, 75015 Bretten (DE); KOKER, Torsten, 76297 Stutensee (DE); LEWANDOWSKI, Marek, 71272 Renningen (DE); METZLER, Friedhelm, 76669 Bad Schönborn (DE); SCHMIDT, Josef, 76676 Graben-Neudorf (DE); SCHÜTTERLE, Ingo, 72488 Sigmaringen (DE); ZUCKER, Mario, 76646 Bruchsal (DE)
(74) Vertreter: Tüngler, Eberhard
(86) Internationale Anmeldenummer: PCT/EP2011/006079
(87) Internationale Veröffentlichungsnummer: WO 2012/076142

(56) Entgegenhaltungen:
- EP-A1- 1 319 866
- WO-A2-03/065546
- US-A1- 2007 120 427
- US-A1- 2008 238 098

## Beschreibung

Die Erfindung betrifft einen Getriebemotor mit einer Kühlanordnung.

Aus der EP 1 319 866 B1 ist ein Getriebemotor bekannt mit einem einzigen Motorgehäuse und mehreren in Motoraufnahmen angeordneten Elektromotoren. Dabei wird ein Kühlmedium zwischen den Elektromotoren vorgesehen, wodurch die Elektromotoren von außen nicht sichtbar angeordnet sind.

Aus der DE 4402337 A1 ist ein Antriebssystem bekannt, das mehrere Elektromotoren aufweist, die in einem Motorlagerblock angeordnet sind.

Aus der US 2008/238098 A1 ist eine Gasturbine bekannt.

Aus der US2007/120427 A1 ist eine elektrische Maschine mit einem flüssigkeitsgekühlten Motor bekannt.

Aus der WO 065546 A2 ist ein Elektromotor bekannt.

Aus der EP 1 319 866 A1 ist ein Getriebemotor bekannt.

Der Erfindung liegt daher die Aufgabe zugrunde, ein Antriebssystem weiterzubilden, wobei der Umweltschutz verbessert sein soll.

Erfindungsgemäß wird die Aufgabe durch einen Getriebemotor mit einer Kühlanordnung nach den in Anspruch 1 angegebenen Merkmalen gelöst.

Von Vorteil ist dabei, dass das Kühlmedium zum Schmieren von Verzahnteilen des Getriebes verwendbar ist. Somit sind antreibende Elektromotoren und das von diesen angetriebene

Getriebe zusammen mit nur einem Kühlkreislauf für ein Kühlmedium kühlbar. Außerdem ist somit auch eine Schmierung bewirkbar, wodurch die Wärmeentwicklung des Getriebes reduzierbar ist.

Erfindungsgemäß werden die aus den Kanälen austretenden Kühlmedium-Ströme zusammengeführt und von dem ersten Verteiler zumindest anteilig einem im Adapter angeordneten Summiergetriebe zugeleitet zur Schmierung und Kühlung der Verzahnungsteile des Summiergetriebes. Von Vorteil ist dabei, dass nicht nur das Getriebe sondern ein Summiergetriebe, welches im Adapter angeordnet ist, auch schmierbar und kühlbar ist.

Bei einer vorteilhaften Ausgestaltung sind der Ölsumpf des Getriebes und der Ölsumpf des Summiergetriebes miteinander verbunden zur Durchleitung von Kühlmedium, wobei eine Pumpe aus dem Ölsumpf Kühlmedium fördert. Von Vorteil ist dabei, dass die beiden Getriebe einen gemeinsamen Ölsumpf aufweisen, der sogar mit einem Öltankbehälter im Volumen vergrößerbar ist. Auf diese Weise ist eine Schmierung von in den Ölsumpf eintauchenden oder eingetauchten Teilen erreicht. Außerdem ist ein Puffer bei schwankender Förderleistung der Pumpe geschaffen.

Bei einer vorteilhaften Ausgestaltung fördert die Pumpe das Kühlmedium zu einem Ölfilter und/oder zu einem Ölkühler. Von Vorteil ist dabei, dass eine aktive Förderung vorgesehen ist und somit ein hoher Durchsatz erreichbar ist, was zu einer sehr wirksamen Kühlung führt.

Bei einer vorteilhaften Ausgestaltung wird das durch den Ölkühler geleitete Kühlmedium den Elektromotoren zugeleitet. Von Vorteil ist dabei, dass das gekühlte Kühlmedium die Wärme der Elektromotoren aufnimmt und danach durch das im Gegensatz zum Motor thermisch weniger empfindliche Getriebe leitbar ist.

Bei einer vorteilhaften Ausgestaltung ist am Ölkühler ein Lüfter vorgesehen ist,
insbesondere wobei ein von dem Lüfter mit Lüftermotor angetriebener Kühlluftstrom an der Oberfläche des Ölkühlers strömt,
insbesondere wobei der Lüftermotor ein Elektromotor ist, insbesondere einer der mit dem Adapterflansch verbundenen Elektromotoren des Getriebemotors. Von Vorteil ist dabei, dass eine effektive Kühlung erreichbar ist. Insbesondere mit Verwendung eine Elektromotors des Getriebemotors als Lüftermotor, beispielsweise durch Verbinden des Lüfters auf ein B-seitig auskragendes Ende einer Motorwelle des Elektromotors, ist ein zusätzlicher Elektromotor einsparbar. Allerdings ist dann die Drehzahl des Lüfters von der Drehzahl des Elektromotors abhängig.

Erfindungsgemäß ist der erste Verteiler außerhalb des Adapters angeordnet, wobei die Zusammenführung der von den Motoren austretenden Kühlmediumströme in der Wandung des Adapterflansches ausgeführt wird und der zumindest anteilige Kühlmediumstrom durch eine durchgehende Öffnung in der Wandung des Adapterflansches geleitet wird zum Raumbereich des Summiergetriebes. Von Vorteil ist dabei, dass der dem Summiergetriebe zugeführte Kühlmediumstrom in einfacher Weise steuerbar ist, nämlich durch Maßnahmen am von außen gut zugänglichen Verteiler.

Bei einer vorteilhaften Ausgestaltung ist der Getriebemotor mit Kühlanordnung derart ausgeführt, dass der Getriebemotor Elektromotoren und ein Getriebe sowie einen Adapter aufweist, welcher zwischen den Elektromotoren und dem Getriebe angeordnet ist,
wobei das Getriebe eine Eintriebswelle und eine Abtriebswelle aufweist,
wobei jeder Motor eine Rotorwelle aufweist,
wobei der Adapter einen gehäusebildenden Adapterflansch aufweist,
wobei der Adapterflansch ein Summierungsgetriebe, insbesondere zur Zusammenführung der von den Motoren erzeugten Leistungsströme auf die Eintriebswelle des Getriebes, zumindest teilweise gehäusebildend umgibt,
wobei die Motoren jeweils von einem Kühlmedium, insbesondere Kühlflüssigkeit, durchströmbar sind, insbesondere flüssigkeitsgekühlt sind,
wobei die Motoren einen Auslass für das Kühlmedium aufweisen,
wobei am Adapterflansch Kanäle ausgebildet sind, welche das am jeweiligen Auslass eines Motors austretende Kühlmedium zusammenführen zu einem Auslass, insbesondere zu einem einzigen gemeinsamen Auslass, am Adapterflansch.

Von Vorteil ist dabei, dass ein modulartiger Aufbau ausgeführt ist, bei dem jeder Motor einzeln schnell und einfach austauschbar ist, ohne dass das gesamte Kühlmedium zuvor abgelassen werden muss. Denn ein Motor ist einfach austauschbar, da er frei zugänglich von der B-Seite her ist. Er muss also nur vom Adapterflansch gelöst und dann ausgetauscht werden. Außerdem sind die Motoren von außen sichtbar angeordnet. Somit sind Schäden, wie beispielsweise Korrosionsschäden schnell und einfach erkennbar. Außerdem ist die abgegebene Leistung der Motoren mittels der gewählten Anzahl der Motoren schnell und einfach an die Anforderung anpassbar.

Darüber hinaus sitzen die jeweiligen Ritzel auf der jeweiligen Motorwelle und benötigen keine eigene Lagerung.

Zuflüsse und Abflüsse sind auf unterschiedlichen Seiten der Motoren angeordnet. Die Leistung der einzelnen Motoren ist mittels des Summiergetriebes summierbar.

Bei einer vorteilhaften Ausgestaltung ist die Eintriebswelle des Getriebes in einem Gehäuseteil des Getriebes, insbesondere Lagertopf, gelagert,
insbesondere wobei das Gehäuseteil an einem weiteren Gehäuseteil des Getriebes mittels eines Zentrierbundes ausgerichtet und verbunden ist. Von Vorteil ist dabei, dass das Zentralrad zusammen mit dem eintreibenden Ritzel des Getriebes, also dem ersten Verzahnteil der ersten Getriebestufe des Getriebes, gemeinsam gelagert ist. Somit muss kein zusätzliches Lager für das Zentralrad eingesetzt werden. Außerdem ist ein vorhandenes Getriebe in einfacher Weise veränderbar für Zwecke der Erfindung, bei der ein mehrmotoriger Antrieb eingesetzt wird. Somit ist nur ein geringer Aufwand an Abänderung notwendig. Insbesondere ist zwischen Motor und Getriebe ein sowieso notwendiger Adapter umrüstbar und mit den erfindungsgemäßen Funktionen, also dem Summierungsgetriebe, der Gehäusebildung für das Summierungsgetriebe, der Vermittlung der Zentrierung zwischen Getriebe und Motoren sowie der Zusammenführung des Kühlmediums, ausstattbar.

Bei einer vorteilhaften Ausgestaltung weist das Summierungsgetriebe ein Zentralrad, insbesondere Verzahnungsteil, insbesondere Stirnrad, auf, welches auf der Eintriebswelle des Getriebes drehfest angeordnet ist,
wobei an jeder Rotorwelle eine Verzahnung ausgebildet ist oder mit jeder Rotorwelle ein Verzahnteil, insbesondere Ritzel, mit Verzahnung drehfest mit der Rotorwelle verbunden ist,
wobei die Ritzel mit dem Zentralrad im Eingriff sind. Von Vorteil ist dabei, dass das Summierungsgetriebe keine eigene Lagerung benötigt sondern alle drehbar angeordneten Teile des Summiergetriebes die sowieso notwendigen Lagerung der Motorwellen oder der Eintriebswelle mitnutzen.

Bei einer vorteilhaften Ausgestaltung ist der Adapterflansch gehäusebildend für das Summierungsgetriebe. Von Vorteil ist dabei, dass im Adapter zwischen Getriebe und Motor ein Summiergetriebe integrierbar ist und dieses ohne Lagerung aber mit Gehäusefunktion umgebbar ist. Somit ist sogar bei entsprechend dichter Ausführung ein Schmierstoff im Summierungsgetriebe vorsehbar. Dabei fungiert der Adapterflansch als Gehäuseteil für das Summierungsgetriebe.

Bei einer vorteilhaften Ausgestaltung ist der Adapterflansch zweistückig aufgebaut, so dass er ein Blech aufweist, an welchem die Kanäle als Vertiefung, insbesondere als Nut, ausgebildet sind, insbesondere eingefräst sind. Von Vorteil ist dabei, dass im Adapterflansch Kanäle zur Zusammenführung des Kühlmediums vorsehbar sind, insbesondere in einfacher und kostengünstiger Weise.

Bei einer vorteilhaften Ausgestaltung ist der Auslass der Motoren jeweils dicht mit einem am Adapterflansch ausgebildeten Einlass zu einem Kanal beziehungsweise mit einem von dem Blech des Adapterflansches ausgebildeten Einlass verbunden, insbesondere wobei der Einlass die Mündung eines jeweiligen der Kanäle ist. Von Vorteil ist dabei, dass die aus den Motoren ausströmenden Kühlmediumströme in den Adapterflansch einleitbar sind und dort zusammenführbar.

Bei einer vorteilhaften Ausgestaltung sind die Motoren beziehungsweise die auf den Rotorwellen der Motoren angeordneten Ritzelverzahnungen in Umfangsrichtung der Getriebeeintriebswelle gleichmäßig voneinander beabstandet. Von Vorteil ist dabei, dass eine gleichmäßige Kraftverteilung erreichbar ist und somit keine wesentlichen Querkraftbelastungen entstehen, also die Belastung für die Lagerung gering bleibt. Außerdem ermöglicht diese Anordnung, dass das Zentralrad auch an den Ritzelverzahnungen am Umfang abgestützt ist und somit auch Schwingungen reduzierbar sind.

Bei einer vorteilhaften Ausgestaltung ist ein auf der Rotorwelle eines Motors drehfest verbundenes Ritzel nur über die beiden Lager der Rotorwelle gelagert. Von Vorteil ist dabei, dass keine zusätzliche Lagerung notwendig ist.

Bei einer vorteilhaften Ausgestaltung ist das Zentralrad mit der Getriebeeintriebswelle in einem Gehäuseteil, insbesondere Lagertopf, des Getriebes gelagert. Von Vorteil ist dabei, dass keine zusätzliche Lagerung für das Zentralrad notwendig ist.

Bei einer vorteilhaften Ausgestaltung weist der Adapterflansch ein Zentriermittel auf, welches an einem Zentriermittel, insbesondere Zentrierbund, des Getriebegehäuseteils, insbesondere des Lagertopfes, ausrichtbar ist, insbesondere wobei Adapterflansch und Lagertopf lösbar verbunden sind, insbesondere schraubverbunden sind. Von Vorteil ist dabei, dass über den Adapterflansch die Motoren zum Getriebegehäuse hin ausrichtbar sind.

Bei einer vorteilhaften Ausgestaltung ist am Adapterflansch eine Aufnahme, insbesondere Aufnahmeöffnung, angeordnet, die ein Zentriermittel, insbesondere Zentrierbund, aufweist, an dem das Lagerschild eines Motors ausgerichtet ist. Von Vorteil ist dabei, dass eine Zentrierung in einfacher Weise erreichbar ist.

Bei einer vorteilhaften Ausgestaltung sind im Lagerschild Kühlkanäle des Statorgehäuses des Motors zusammengeführt an einen gemeinsamen Mündungsbereich als Auslass, insbesondere wobei im anderen Lagerschild des Motors die Kühlkanäle des Statorgehäuses des Motors zusammengeführt sind zu einem gemeinsamen Mündungsbereich als Einlass für das Kühlmedium. Von Vorteil ist dabei, dass nur ein einziger Einlass beziehungsweise Auslass notwendig ist. Somit ist nur hierbei ein dichtes Verbindung erforderlich. Die sonstige Kanalstruktur ist innerhalb der Motorteile in einfacher Weise abdichtbar.

Bei einer vorteilhaften Ausgestaltung ist das Summierungsgetriebe mit Kühlflüssigkeit geschmiert, indem eine durchgehende Öffnung, insbesondere ein Verbindungskanal, vom Raumbereich des Summiergetriebes zu einem Kanal des Adapterflansches führt. Von Vorteil ist dabei, dass eine Schmierung in einfacher Weise ausführbar ist und somit kein großer Aufwand hierfür notwendig ist, insbesondere gilt dies bei der Verwendung von Öl als Kühlmedium.

Die Erfindung wird nun anhand von schematischen Abbildungen näher erläutert:
In der Figur 1 ist ein erfindungsgemäßer Antrieb mit einem von vier Motoren angetriebenen Getriebe gezeigt, wobei die Drehmomente der vier Motoren über ein Summierungsgetriebe der Getriebeeingangswelle zugeführt werden.

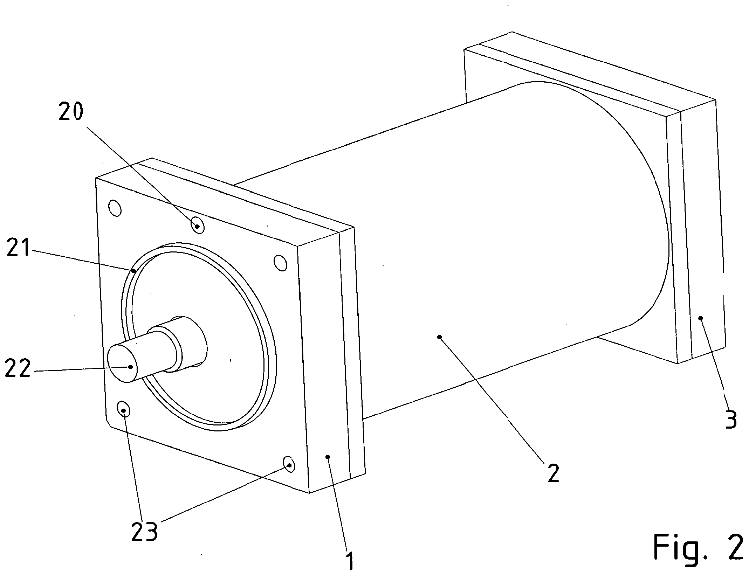

In der Figur 2 ist einer der Motoren in Schrägansicht gezeigt.

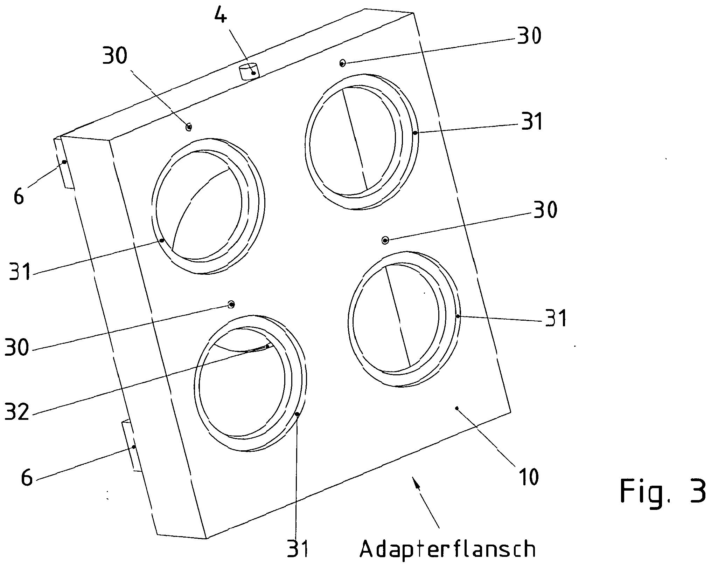

In der Figur 3 ist ein Adapterflansch 10 in Schrägansicht gezeigt.

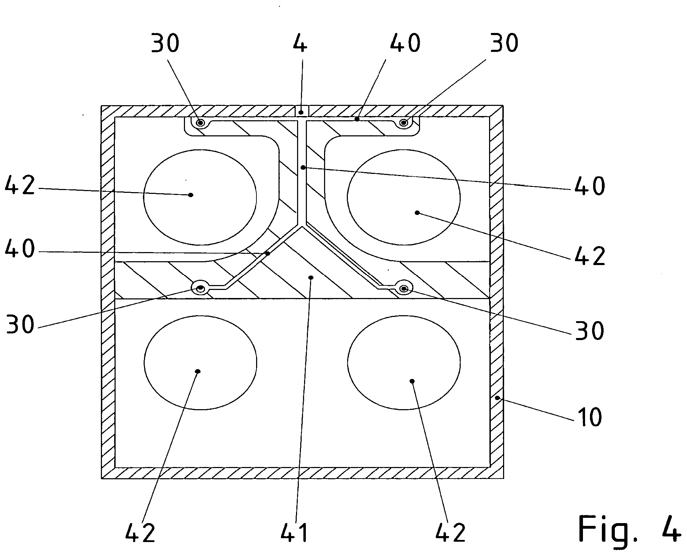

In der Figur 4 ist ein Blech am Adapterflansch 10 in Draufsicht gezeigt.

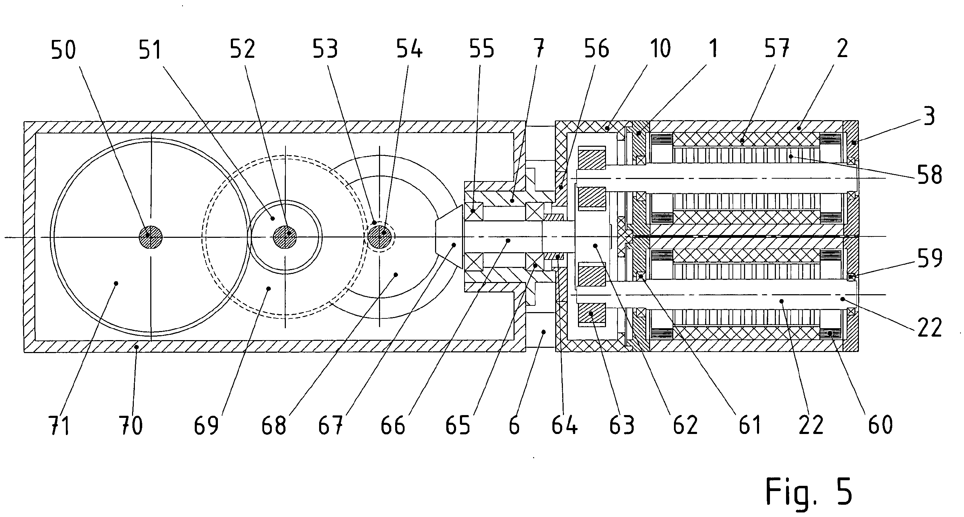

In der Figur 5 ist ein Querschnitt durch den Antrieb dargestellt.
In der Figur 6 ist der erfindungsgemäße Antrieb zusammen mit der zugehörigen Kühlanordnung dargestellt.
In der Figur 7 ist der Kühlmediumskreislauf schematisch dargestellt.

Bei dem in den Figuren schematisch dargestellten Antrieb weist jeder Motor einen abtriebsseitigen A-Lagerschild 1 auf, in welchem ein Lager 61 für die Rotorwelle des Motors angeordnet ist, und ein am axial anderen Ende, also getriebeabgewandten Ende, also B-Lagerschild 3, auf, in welchem ein weiteres Lager 59 der Rotorwelle vorgesehen ist.

A-Lagerschild 1 und B-Lagerschild 3 sind mittels des Statorgehäuses 2 verbunden, welches den Stator 57 umfasst. Axial stehen aus dem Stator 57 die Umlenkbereiche der Statorwicklung, also Wickelköpfe 60, hervor.

Die Motorwelle 22 trägt das Rotorpaket 58, an deren axialem Endberiech das Ritzel 63 drehfest verbunden ist, insbesondere mittels Passfederverbindung.

Die Motoren sind gleichartig aufgebaut. Ihre Ritzel 63 sind im Eingriff mit dem Zentralrad 62, das drehfest mit der Eintriebswelle 66 des Getriebes verbunden ist, welche das eintreibende Ritzel 67 trägt. Dabei ist die Eintriebswelle 66 über Lager (55, 65) in einem Gehäuseteil des Getriebes, nämlich einem Lagertopf 7 gelagert, welcher mit dem Getriebegehäuse 70 verbunden ist. Mittels einer Wellenmutter 64 werden die Lager 55 und 65 vorgespannt. Im Getriebegehäuse 70 sind die Abtriebswelle 50 und die jeweils miteinander im Eingriff sich befindenden Verzahnungsteile, wie Ritzel 51, 53 und zugehörige Zahnräder sowie die Zwischenwellen 52, 54 gezeigt.

Am Lagertopf 7 ist ein Zentrierflansch 56 angeordnet, welcher mit einem Adapterflansch 10 verbunden ist, der das Summierungsgetriebe, aufweisend das Zentralrad 62 und die im Eingriff sich befindenden Ritzel 63, gehäusebildend zumindest teilweise umgibt.

Der Adapterflansch 10 weist Öffnungen 42 zur Aufnahme der Motoren, insbesondere zur Aufnahme der A-Lagerschilde 1 der Motoren auf. Hierbei weist ist auch an jedem Randbereich einer Öffnung 42 ein Zentrierbund 31 angeordnet, so dass die Motoren hieran ausrichtbar und zentrierbar sind. Auf diese Weise ist also ein hochgenaues Anordnen der Motoren ermöglicht. Dies ermöglicht somit auch, das aus einem Motor austretende Kühlmedium einem Einlass 30 im Adapterflansch zuzuführen.

Denn jeder Motor ist mittels des Kühlmediums entwärmbar, wobei das Kühlmedium durch einen Einlass 5 am B-Lagerschild 3 in Kanäle des jeweiligen Motors, welche im Statorgehäuse 2 angeordnet sind, einströmt und am anderen axialen Ende, also am A-Lagerschild 1 durch den Auslass 20 in den Einlass 30 des Adapterflansches einströmt.

Somit ist nun ein effektives Durchströmen und somit auch Entwärmen ermöglicht.

Im Adapterflansch 10 wird das einströmende Kühlmedium durch Kanäle 40 zusammengeführt, welche in einem auf den restlichen Adapterflansch aufgeschweißten Blechteil eingefräst sind. Die zusammengeführten Kühlmediumströme sind dann durch den Auslass 4 herausführbar.

Der Adapterflansch 10 hat also einerseits die Funktion eines Gehäuseteils für das Summierungsgetriebe und andererseits die Funktion der Zusammenführung und Herausleitung des Kühlmediums der einzelnen Motoren. Außerdem verbindet er die Motoren mit dem Getriebegehäuse 70 und ermöglicht ein Ausrichten und Zentrieren der Motoren relativ zum Getriebe.

Das Getriebegehäuse 70 dient also mittels des Lagertopfes 7 zum Lagern des Zentralrades 62. Die Motoren dienen zum Lagern der Ritzel über die im Motorgehäuse gelagerte Motorwelle 22.

Somit übermittelt der Adapterflansch die Ausrichtung der Motoren zum Getriebegehäuse 70 mit zugehörigem Lagertopf 7.

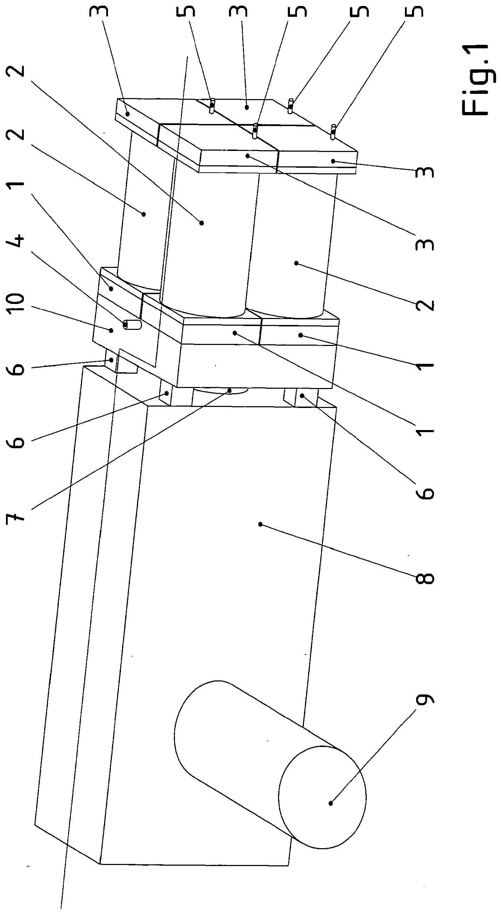

Wie in Figur 1 dargestellt, sind zwischen dem Adapterflansch 10 und dem Getriebegehäuse (8, 70) Abstandshalter 6 vorsehbar. Somit ist eine bessere Zugänglichkeit erreichbar, insbesondere zum Bereich des Lagertopfes 7. Außerdem ist eine Festlegung des Adapterflansches an wenigen Flächen ermöglicht, so dass nur wenig Bearbeitung am Getriebegehäuse (8, 70) notwendig ist.

Jeder der Motoren weist einen Einlass 5 für Kühlmedium auf. Alle Einlässe 5 sind aus einer gemeinsamen Kühlmediumsquelle speisbar. Am Auslass 4 wird das zusammengeführte Kühlmedium herausgeführt und vorzugsweise direkt oder über einen Kühler zur Kühlmediumsquelle geführt.

Der Auslass 20 für Kühlmedium ist bei jedem Motor mit einer Abdichtung dicht verbindbar mit dem Einlass 30 am Blech des Adapterflansches.

Mittels des am A-seitigen Lagerschild 1 angeordneten Zentrierbunds 31 ist ein genaues Ausrichten der Motoren am Zentrierbund 31 des Adapterflansches ermöglicht, so dass das auf der Motorwelle 22 drehfest verbundene Ritzel genau ausgerichtet ist zum Zentralrad 62.

Vorzugsweise weist das Statorgehäuse in Umfangsrichtung voneinander beabstandete, axial verlaufende, parallel zueinander ausgerichtete Kühlkanäle auf, wobei das durch die Kühlkanäle geführte Kühlmedium mittels einer im A-Lagerschild 1 angeordneten, in Umfangsrichtung umlaufenden Ringnut zusammengeführt wird und am Auslass 20 herausgeführt wird.

Dabei wird das Lageschild 1 mittels Schrauben, welche in den Befestigungsbohrungen 23 angeordnet sind, mit dem Statorgehäuse 2 verbunden.

Am Adapterflansch ist ein Zentriermittel 32 für Zentrierflansch angeordnet, mittels dessen der Adapterflansch 10 am Lagertopf 7 zentrierbar ist.

Bei der Erfindung ist der Getriebemotor mit einer Kühlanordnung mit Kühlkreislauf für ein Kühlmedium, insbesondere mit einem System von Rohrleitungen und Kanälen, ausgestattet.

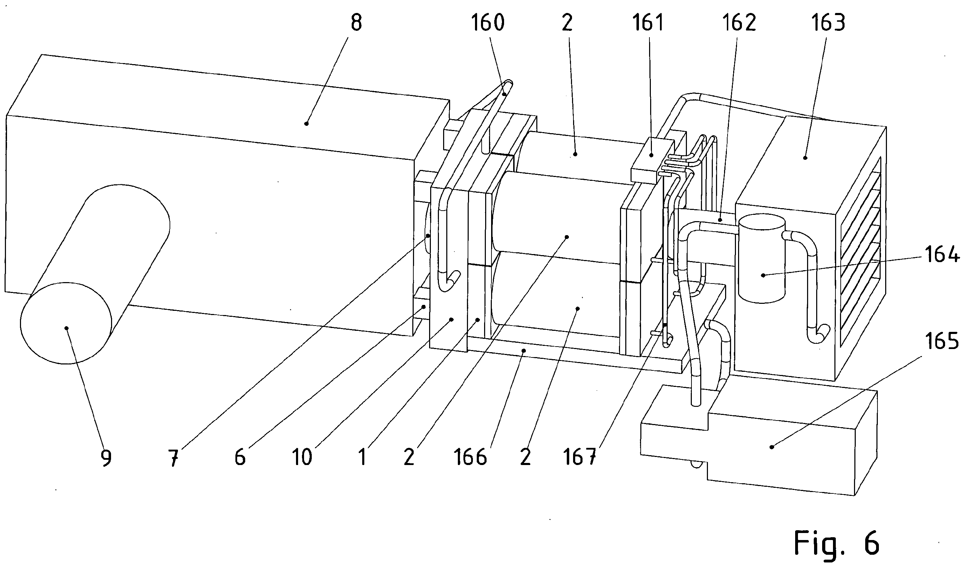

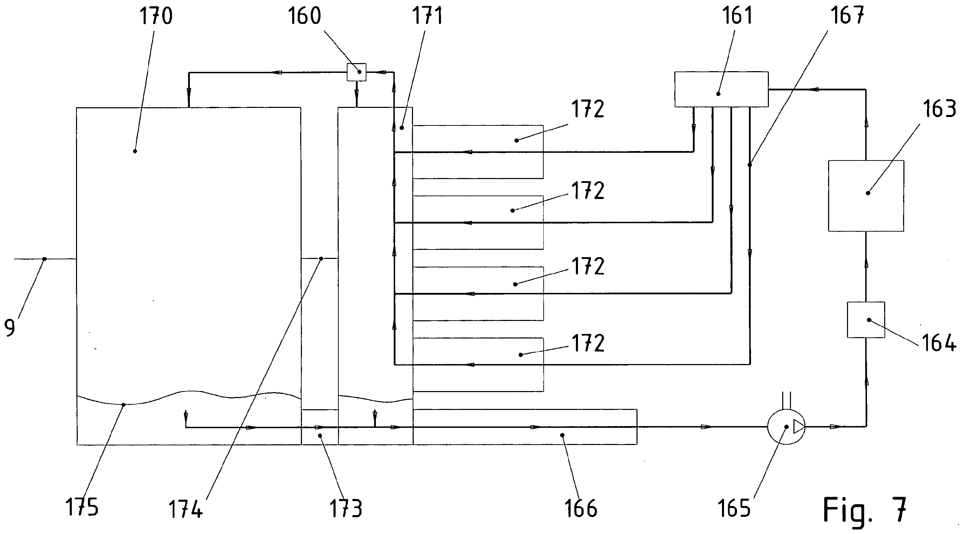

Wie in Figur 6 und Figur 7 dargestellt, wird das durch die Statorgehäuse 2 der Elektromotoren 172 geführte und in dem Adapterflansch 10 zusammengeführte Kühlmedium einem Verteiler 160 zugeführt, welcher am Adapterflansch 10 befestigt ist.

Aus dem Verteiler 160 wird über eine erste Rohrleitung dem Summierungsgetriebe 171 Kühlmedium zum Schmieren und gleichzeitigem Kühlen des Summiergetriebes 171 zugeführt, also in den vom Adapterflansch 10 gehäusebildend umgebenen Innenraum. Hierzu ist eine durchgehende Öffnung in der Wandung des Adapterflansches vorgesehen, durch die das Kühlmedium dem Summierungsgetriebe 171 zugeleitet wird.

Das im Summierungsgetriebe 171 nach unten abgetropfte Kühlmedium bildet einen Ölsumpf, welcher mit einem Öltankbehälter 166 und mit dem Ölsumpf des Getriebes 170 verbunden ist. Der Ölsumpf des Getriebes 170 ist dabei vom Getriebegehäuse 8 gehalten.

Aus dem Verteiler 160 wird über eine zweite Rohrleitung dem Getriebe 170 Kühlmedium zum Schmieren und gleichzeitigem Kühlen zugeführt, wobei das nach unten abgetropfte Kühlmedium wiederum im Ölsumpf aufgefangen wird. Der Ölsumpf weist den Pegel 175 auf, der allerdings im Betrieb mit Schaum und/oder Wellen nur unscharf erkennbar ist.

Der Ölsumpf des Getriebes 170 steht also im Austausch mit dem Öltankbehälter 166 und dem Ölsumpf des Summiergetriebes 171 im Adapterflansch 10. Hierzu ist ein Verbindungsmittel 173 vorgesehen, das dicht mit dem Getriebegehäuse 8 des Getriebes 170 und mit dem Adapterflansch 10 verbunden ist und eine vom Ölsumpf des Getriebes 170 bis zum Ölsumpf im Adapterflansch 10 durchgehende Öffnung aufweist.

Mittels einer Ölpumpe 165 wird aus dem Öltankbehälter 166, also auch aus dem jeweiligen Ölsumpf der Getriebe (170, 171) Kühlmedium herausgefördert und über einen Ölfilter 164 einem Ölkühler 163 zugeführt, der von einem Lüfter mit Lüftermotor 162 entwärmt wird. Da der Lüftermotor 162 unabhängig von den anderen Motoren 172 betreibbar ist, ist ein effektives Kühlen des Kühlmediums und somit auch Abführen der Wärme an die Umgebung ermöglicht.

Aus dem Ölkühler wird das entwärmte, also abgekühlte Kühlmedium einem weiteren Verteiler 161 zugeführt, aus dem die Motoren 172 mit Kühlmedium versorgt werden, also das Kühlmedium dem jeweiligen B-seitigen Lagerschild zugeführt wird, in welchem es verteilt wird auf die einzelnen Kanäle des Statorgehäuses 2 des jeweiligen Elektromotors 172. Im A-seitigen Lagerschild wird das aus den Kühlkanälen des Statorgehäuses 2 austretende Kühlmedium zusammengeführt und über einen gemeinsamen Auslass aus dem A-seitigen Lagerschild dem Adapterflansch 10 zugeführt, in welchem alle aus den Motoren 172 austretenden Kühlmittelströme zusammengeführt werden.

In Figur 7 ist die im Lagertopf 7 gelagerte Eintriebswelle des Getriebes 170 als Welle 174 bezeichnet.

### Bezugszeichenliste

- 1: A-Lagerschild
- 2: Statorgehäuse
- 3: B-Lagerschild
- 4: Auslass für Kühlmedium
- 5: einlass für Kühlmedium
- 6: Abstandshalter
- 7: Lagertopf
- 8: Getriebegehäuse
- 9: Abtriebswelle
- 10: Adapterflansch
- 20: Auslass für Kühlmedium
- 21: Zentrierbund
- 22: Motorwelle
- 23: Befestigungsbohrungen
- 30: Einlass für Kühlmedium
- 31: Zentrierbund
- 32: Zentriermittel für Zentrierflansch
- 40: Kanal
- 41: aufgeschweißtes Blech mit eingeschweißten Kanälen
- 42: Öffnung zur Aufnahme eines Motors
- 50: Welle
- 51: Ritzel
- 52: Welle
- 53: Ritzel
- 54: Welle
- 55: Lager
- 56: Zentrierflansch
- 57: Stator
- 58: Rotorpaket
- 59: Lager
- 60: Wickelkopf
- 61: Lager
- 62: Zentralrad
- 63: Ritzel
- 64: Wellenmutter
- 65: Lager
- 66: Welle
- 67: Ritzel
- 68: Zahnrad
- 69: Zahnrad
- 70: Getriebegehäuse
- 71: Zahnrad
- 160: Verteiler
- 161: Verteiler
- 162: Lüftermotor
- 163: Ölkühler
- 164: Ölfilter
- 165: Ölpumpe
- 166: Öltankbehälter
- 167: Rohrleitung
- 170: Getriebe
- 171: Summierungsgetriebe
- 172: Elektromotor
- 173: Verbindung
- 174: Welle
- 175: Pegel

## Patentansprüche

1. Getriebemotor mit einer Kühlanordnung, wobei der Getriebemotor Elektromotoren (172), ein Getriebe (170) sowie einen Adapter (10) aufweist, welcher zwischen den Elektromotoren (172) und dem Getriebe (170) angeordnet ist, wobei die Elektromotoren (172) Kanäle für ein Kühlmedium aufweisen, wobei die Motoren jeweils von einem Kühlmedium durchströmt sind,
wobei das Kühlmedium Öl ist,
wobei die aus den Kanälen austretenden Kühlmedium-Ströme zusammengeführt und von einem ersten Verteiler (160) anteilig dem Getriebe (170) zugeleitet werden zur Schmierung und Kühlung der Verzahnungsteile des Getriebes (170), wobei der erste Verteiler (160) außerhalb des Adapters (10) angeordnet ist, **dadurch gekennzeichnet, dass**
der Getriebemotor ein Summiergetriebe (171) aufweist, wobei die besagten aus den Kanälen ausgetretenen und zusammengeführten Kühlmedium-Ströme von dem ersten Verteiler (160) anteilig dem im Adapter (10) angeordneten Summiergetriebe (171) zugeleitet werden, indem ein Verbindungskanal vom Raumbereich des Summiergetriebes (171) zum Kanal des Adapterflansches (10) führt, zur Schmierung und Kühlung der Verzahnungsteile des Summiergetriebes (171), wobei die Zusammenführung der von den Motoren austretenden Kühlmediumströme in der Wandung des Adapterflansches (10) ausgeführt wird und der anteilige Kühlmediumstrom durch eine durchgehende Öffnung in der Wandung des Adapterflansches (10) geleitet wird zum Raumbereich des Summiergetriebes (171).

2. Getriebemotor mit einer Kühlanordnung nach Anspruch 1,
**dadurch gekennzeichnet, dass**
der Ölsumpf des Getriebes und der Ölsumpf des Summiergetriebes miteinander verbunden sind zur Durchleitung von Kühlmedium, wobei eine Pumpe aus dem Ölsumpf Kühlmedium fördert,
insbesondere wobei mit dem Olsumpf ein Oltankbehälter (166) verbunden ist, insbesondere so dass eine Vergrößerung des mit dem Ölsumpf im Ausgleich stehenden Kühlmediumreservoirs und/oder -volumens erreichbar ist.

3. Getriebemotor mit einer Kühlanordnung nach Anspruch 2,
**dadurch gekennzeichnet, dass**
die Pumpe das Kühlmedium zu einem Ölkühler (163) fördert.

4. Getriebemotor mit einer Kühlanordnung nach Anspruch 3,
**dadurch gekennzeichnet, dass**
das durch den Ölkühler (163) geleitete Kühlmedium den Elektromotoren (172) zugeleitet wird.

5. Getriebemotor mit einer Kühlanordnung nach Anspruch 3,
**dadurch gekennzeichnet, dass**
am Ölkühler (163) ein Lüfter vorgesehen ist,
insbesondere wobei ein von dem Lüfter mit Lüftermotor angetriebener Kühlluftstrom an der Oberfläche des Ölkühlers (163) strömt,
insbesondere wobei der Lüftermotor einer der mit dem Adapterflansch (10) verbundenen Elektromotoren (172) des Getriebemotors ist.

6. Getriebemotor mit einer Kühlanordnung nach mindestens einem der vorangegangenen Ansprüche,
**dadurch gekennzeichnet, dass**
das Getriebe eine Eintriebswelle und eine Abtriebswelle (9) aufweist,
wobei jeder Motor eine Rotorwelle aufweist,
wobei der Adapter einen gehäusebildenden Adapterflansch (10) aufweist,
wobei der Adapterflansch (10) ein Summierungsgetriebe (171), insbesondere zur Zusammenführung der von den Motoren erzeugten Leistungsströme auf die Eintriebswelle des Getriebes, zumindest teilweise gehäusebildend umgibt,
wobei die Motoren einen Auslass (4, 20) für das Kühlmedium aufweisen,
wobei am Adapterflansch (10), insbesondere in der Wandung des Adapterflansches (10), Kanäle ausgebildet sind, welche das am jeweiligen Auslass (4, 20) eines Motors austretende Kühlmedium zusammenführen zu einem Auslass (4, 20), insbesondere zu einem einzigen gemeinsamen Auslass (4, 20), am Adapterflansch (10).

7. Getriebemotor mit einer Kühlanordnung nach Anspruch 6,
**dadurch gekennzeichnet, dass**
die Eintriebswelle des Getriebes in einem Gehäuseteil des Getriebes, insbesondere Lagertopf, gelagert ist,
insbesondere wobei das Gehäuseteil an einem weiteren Gehäuseteil des Getriebes mittels eines Zentrierbundes (21, 31) ausgerichtet und verbunden ist.

8. Getriebemotor mit einer Kühlanordnung nach einem der Ansprüche 6 bis 7,
**dadurch gekennzeichnet, dass**
das Summierungsgetriebe (171) ein Zentralrad (62), insbesondere Verzahnungsteil, insbesondere Stirnrad, aufweist, welches auf der Eintriebswelle des Getriebes drehfest angeordnet ist,
wobei an jeder Rotorwelle eine Verzahnung ausgebildet ist oder mit jeder Rotorwelle ein Verzahnteil, insbesondere Ritzel, mit Verzahnung drehfest mit der Rotorwelle verbunden ist, wobei die Ritzel mit dem Zentralrad (62) im Eingriff sind.

9. Getriebemotor mit einer Kühlanordnung nach einem der Ansprüche 6 bis 8,
**dadurch gekennzeichnet, dass**
der Adapterflansch (10) gehäusebildend für das Summierungsgetriebe (171) ist.

10. Getriebemotor mit einer Kühlanordnung nach einem der Ansprüche 6 bis 9,
**dadurch gekennzeichnet, dass**
der Adapterflansch (10), insbesondere eine Wandung des Adapterflansches (10), zweistückig aufgebaut ist, so dass er ein Blech aufweist, an welchem die Kanäle als Vertiefung, insbesondere als Nut, ausgebildet sind, insbesondere eingefräst sind.

11. Getriebemotor mit einer Kühlanordnung nach einem der Ansprüche 6 bis 10,
**dadurch gekennzeichnet, dass**
der Auslass (4, 20) der Motoren jeweils dicht mit einem am Adapterflansch (10) ausgebildeten Einlass (5, 30) zu einem Kanal (40) beziehungsweise mit einem von dem Blech des Adapterflansches (10) ausgebildeten Einlass (5, 30) verbunden ist,
insbesondere wobei der Einlass (5, 30) die Mündung eines jeweiligen der Kanäle ist.

12. Getriebemotor mit einer Kühlanordnung nach einem der Ansprüche 6 bis 11,
**dadurch gekennzeichnet, dass**
die Motoren beziehungsweise die auf den Rotorwellen der Motoren angeordneten Ritzelverzahnungen in Umfangsrichtung der Getriebeeintriebswelle gleichmäßig voneinander beabstandet sind.

13. Getriebemotor mit einer Kühlanordnung nach einem der Ansprüche 6 bis 12,
**dadurch gekennzeichnet, dass**
ein auf der Rotorwelle eines Motors drehfest verbundenes Ritzel (51, 53, 63, 67) nur über die beiden Lager der Rotorwelle gelagert ist.

14. Getriebemotor mit einer Kühlanordnung nach einem der Ansprüche 6 bis 13,
**dadurch gekennzeichnet, dass**
das Zentralrad (62) mit der Getriebeeintriebswelle in einem Gehäuseteil, insbesondere Lagertopf, des Getriebes gelagert ist.

15. Getriebemotor mit einer Kühlanordnung nach einem der Ansprüche 6 bis 14,
**dadurch gekennzeichnet, dass**
der Adapterflansch (10) ein Zentriermittel (32) aufweist, welches an einem Zentriermittel (32), insbesondere Zentrierbund (21, 31), des Getriebegehäuseteils, insbesondere des Lagertopfes, ausrichtbar ist, insbesondere wobei Adapterflansch (10) und Lagertopf lösbar verbunden sind, insbesondere schraubverbunden sind.

16. Getriebemotor mit einer Kühlanordnung nach einem der Ansprüche 6 bis 15,
**dadurch gekennzeichnet, dass**
am Adapterflansch (10) eine Aufnahme, insbesondere Aufnahmeöffnung, angeordnet ist, die ein Zentriermittel (32), insbesondere Zentrierbund (21, 31), aufweist, an dem das Lagerschild eines Motors ausgerichtet ist.

17. Getriebemotor mit einer Kühlanordnung nach einem der Ansprüche 6 bis 16,
**dadurch gekennzeichnet, dass**
die Motoren Synchronmotoren sind oder zumindest Dauermagnete aufweisen, insbesondere wobei in Umfangsrichtung zwischen drei und acht Motoren angeordnet sind, insbesondere in regelmäßiger Beabstandung in Umfangsrichtung.

18. Getriebemotor mit einer Kühlanordnung nach einem der Ansprüche 6 bis 17,
**dadurch gekennzeichnet, dass**
im Lagerschild Kühlkanäle des Statorgehäuses (2) des Motors zusammengeführt sind an einen gemeinsamen Mündungsbereich als Auslass (4, 20),
insbesondere wobei im anderen Lagerschild des Motors die Kühlkanäle des Statorgehäuses (2) des Motors zusammengeführt sind zu einem gemeinsamen Mündungsbereich als Einlass (5, 30) für das Kühlmedium.

19. Getriebemotor mit einer Kühlanordnung nach einem der Ansprüche 6 bis 18,
**dadurch gekennzeichnet, dass**
das Summierungsgetriebe (171) mit Kühlflüssigkeit geschmiert ist, indem eine durchgehende Öffnung, insbesondere ein Verbindungskanal, vom Raumbereich des Summiergetriebes zu einem Kanal (40) des Adapterflansches (10) führt.

## Claims

1. A geared motor having a cooling arrangement, wherein the geared motor has electric motors (172), a gear unit (170) and an adapter (10), arranged between the electric motors (172) and the gear unit (170), wherein the electric motors (172) have channels for a cooling medium, wherein the motors are in each case flowed through by a cooling medium, wherein the cooling medium is oil, wherein the cooling-medium streams issuing from the channels are brought together and proportionately supplied to the gear unit (170), by a first distributor (160), for lubrication and cooling of the toothed parts of the gear unit (170), wherein the first distributor (160) is arranged exterior to the adapter (10), **characterised in that** the geared motor has a summation gear unit (171), wherein the aforementioned cooling-medium streams, issued from the channels and brought together, are supplied proportionately to the summation gear unit (171), arranged in the adapter (10), by the first distributor (160) because a connecting channel leads from the spatial region of the summation gear unit (171) to the channel of the adapter flange (10), for the lubrication and cooling of the toothed parts of the summation gear unit (171), wherein the bringing together of the cooling-medium streams issuing from the motors is carried out in the wall of the adapter flange (10) and the proportionate cooling-medium stream is led to the spatial region of the summation gear unit (171) through a through-passing opening in the wall of the adapter flange (10).

2. A geared motor having a cooling arrangement according to claim 1, **characterised in that** the oil sump of the gear unit and the oil sump of the summation gear unit are connected to one another for the passage of cooling medium, wherein a pump conveys cooling medium from the oil sump, in particular wherein an oil tank container (166) is connected to the oil sump, in particular so that there is achievable an increase in the cooling medium reservoir and/or volume balanced with the oil sump.

3. A geared motor having a cooling arrangement according to claim 2, **characterised in that** the pump conveys the cooling medium to an oil cooler (163).

4. A geared motor having a cooling arrangement according to claim 3, **characterised in that** the cooling medium led through the oil cooler (163) is supplied to the electric motors (172).

5. A geared motor having a cooling arrangement according to claim 3, **characterised in that** a fan is provided on the oil cooler (163), in particular wherein a cooling-medium stream driven by the fan with fan motor flows past the surface of the oil cooler (163), in particular wherein the fan motor is one of the electric motors (172), connected to the adapter flange (10), of the geared motor.

6. A geared motor having a cooling arrangement according to at least one of the preceding claims, **characterised in that** the gear unit has an input shaft and a driven shaft (9), wherein each motor has a rotor shaft, wherein the adapter has a housing-forming adapter flange (10), wherein the adapter flange (10) surrounds a summation gear unit (171), in particular for the bringing together at the input shaft of the gear unit of the power currents generated by the motors, in an at least partially housing-forming manner, wherein the motors have an outlet (4, 20) for the cooling medium, wherein channels are formed at the adapter flange (10), in particular in the wall of the adapter flange (10), which bring together at an outlet (4, 20), in particular at a single, common outlet (4, 20), at the adapter flange (10) the cooling medium issuing at the respective outlet (4, 20) of a motor.

7. A geared motor having a cooling arrangement according to claim 6, **characterised in that** the input shaft of the gear unit is mounted in a housing part of the gear unit, in particular bearing pot, in particular wherein the housing part is aligned with and connected to a further housing part of the gear unit by means of a centring collar (21, 31).

8. A geared motor having a cooling arrangement according to any one of claims 6 to 7, **characterised in that** the summation gear unit (171) has a central wheel (62), in particular toothed part, in particular spur gear, which is arranged on the input shaft of the gear unit in a rotationally-fixed manner, wherein toothing is formed on each rotor shaft or with each rotor shaft there is a toothed part, in particular a pinion, connected with toothing to the rotor shaft in a rotationally-fixed manner, wherein the pinions engage the central wheel (62).

9. A geared motor having a cooling arrangement according to any one of claims 6 to 8, **characterised in that** the adapter flange (10) forms a housing for the summation gear unit (171).

10. A geared motor having a cooling arrangement according to any one of claims 6 to 9, **characterised in that** the adapter flange (10), in particular a wall of the adapter flange (10), is two-piece in construction, so that it has a metal sheet in which the channels are formed, in particular milled, as a depression, in particular as a groove.

11. A geared motor having a cooling arrangement according to any one of claims 6 to 10, **characterised in that** the outlet (4, 20) of the motors is in each case imperviously connected to an inlet (5, 30), formed at the adapter flange (10), to a channel (40) or imperviously connected to an inlet (5, 30) formed by the metal sheet of the adapter flange (10), in particular wherein the inlet (5, 30) is the mouth of a respective one of the channels.

12. A geared motor having a cooling arrangement according to any one of claims 6 to 11, **characterised in that** the motors or the pinion teeth arranged on the rotor shafts of the motors are uniformly spaced apart from one another in the circumferential direction of the input shaft of the gear unit.

13. A geared motor having a cooling arrangement according to any one of claims 6 to 12, **characterised in that** a pinion (51, 53, 63, 67) connected on the rotor shaft of a motor in a rotationally-fixed manner is only mounted via the two bearings of the rotor shaft.

14. A geared motor having a cooling arrangement according to any one of claims 6 to 13, **characterised in that** the central wheel (62) together with the input shaft of the gear unit is mounted in a housing part, in particular bearing pot, of the gear unit.

15. A geared motor having a cooling arrangement according to any one of claims 6 to 14, **characterised in that** the adapter flange (10) has a centring means (32) which can be aligned with a centring means (32), in particular a centring collar (21, 31), of the gear unit housing part, in particular of the bearing pot, in particular wherein adapter flange (10) and bearing pot are detachably connected, in particular screw-connected.

16. A geared motor having a cooling arrangement according to any one of claims 6 to 15, **characterised in that** a receiver, in particular receiving opening, is arranged on the adapter flange (10) and has a centring means (32), in particular centring collar (21, 31), with which the end shield of a motor is aligned.

17. A geared motor having a cooling arrangement according to any one of claims 6 to 16, **characterised in that** the motors are synchronous motors or at least have permanent magnets, in particular wherein between three and eight motors are arranged in the circumferential direction, in particular with regular spacing in the circumferential direction.

18. A geared motor having a cooling arrangement according to any one of claims 6 to 17, **characterised in that** cooling channels of the stator housing (2) of the motor are brought together in the end shield, at a common mouth region as outlet (4, 20), in particular wherein the cooling channels of the stator housing (2) of the motor are in the other end shield brought together to a common mouth region as inlet (5, 30) for the cooling medium.

19. A geared motor having a cooling arrangement according to any one of claims 6 to 18, **characterised in that** the summation gear unit (171) is lubricated with cooling fluid because a through-passing opening, in particular a connecting channel, leads from the spatial region of the summation gear unit to a channel (40) of the adapter flange (10).

## Revendications

1. Motoréducteur comportant un dispositif de refroidissement, le motoréducteur comprenant des moteurs électriques (172), une transmission (170) ainsi qu'un adaptateur (10), lequel est disposé entre les moteurs électriques (172) et la transmission (170),
les moteurs électriques (172) comprenant des canaux pour un fluide de refroidissement, les moteurs étant traversés respectivement par un fluide de refroidissement,
le fluide de refroidissement étant de l'huile,
les flux de fluide de refroidissement sortant des canaux étant réunis et étant acheminés par un premier distributeur (160) proportionnellement à la transmission (170) pour la lubrification et le refroidissement des parties de denture de la transmission (170),
le premier distributeur (160) étant disposé à l'extérieur de l'adaptateur (10),
**caractérisé en ce que**
le motoréducteur comprend une transmission sommatrice (171),
lesdits flux de fluide de refroidissement réunis et sortant des canaux étant acheminés par le premier distributeur (160) proportionnellement à la transmission sommatrice (171) disposée dans l'adaptateur (10), par le fait qu'un canal de liaison mène de la région spatiale de la transmission sommatrice (171) jusqu'au canal de la bride d'adaptateur (10), pour la lubrification et le refroidissement des parties de denture de la transmission sommatrice (171),
la réunion des flux de fluide de refroidissement sortant des moteurs étant effectuée dans la paroi de la bride d'adaptateur (10) et le flux de fluide refroidissement proportionnel étant guidé à travers une ouverture traversante dans la paroi de la bride d'adaptateur (10) jusqu'à la région spatiale de la transmission sommatrice (171) .

2. Motoréducteur comportant un dispositif de refroidissement selon la revendication 1,
**caractérisé en ce que**
le carter d'huile de la transmission et le carter d'huile de la transmission sommatrice sont reliés l'un à l'autre pour le passage du fluide de refroidissement, une pompe refoulant le fluide refroidissement à partir du carter d'huile,
en particulier un réservoir d'huile (168) étant relié au carter d'huile,
en particulier de telle sorte qu'une augmentation du réservoir et/ou du volume de fluide refroidissement de compensation du carter d'huile puisse être obtenue.

3. Motoréducteur comportant un dispositif de refroidissement selon la revendication 2,
**caractérisé en ce que**
la pompe refoule le fluide refroidissement jusqu'à un refroidisseur d'huile (163).

4. Motoréducteur comportant un dispositif de refroidissement selon la revendication 3,
**caractérisé en ce que**
le fluide refroidissement guidé à travers le refroidisseur d'huile (163) est acheminé jusqu'aux moteurs électriques (172).

5. Motoréducteur comportant un dispositif de refroidissement selon la revendication 3,
**caractérisé en ce**
**qu'**un ventilateur est prévu au niveau du refroidisseur d'huile (163),
en particulier un flux d'air de refroidissement entraîné par le ventilateur à l'aide d'un moteur de ventilateur s'écoulant sur la surface du refroidisseur d'huile (163), en particulier le moteur de ventilateur étant l'un des moteurs électriques (172), reliés à la bride d'adaptateur (10), du motoréducteur.

6. Motoréducteur comportant un dispositif de refroidissement selon au moins l'une des revendications précédentes,
**caractérisé en ce que**
la transmission comprend un arbre d'entrée et un arbre de sortie (9),
chaque moteur comprenant un arbre de rotor,
l'adaptateur comprenant une bride d'adaptateur (10) formant un carter,
la bride d'adaptateur (10) entourant au moins partiellement une transmission sommatrice (171) de manière à former un carter, en particulier pour la réunion des flux de puissance générés par les moteurs sur l'arbre d'entrée de la transmission,
les moteurs comprenant une sortie (4, 20) pour le fluide refroidissement,
des canaux étant réalisés au niveau de la bride d'adaptateur (10), en particulier dans la paroi de la bride d'adaptateur (10), lesquels canaux réunissent le fluide refroidissement sortant au niveau de la sortie (4, 20) respective d'un moteur en une sortie (4, 20), en particulier en une sortie (4, 20) commune unique, au niveau de la bride d'adaptateur (10).

7. Motoréducteur comportant un dispositif de refroidissement selon la revendication 6,
**caractérisé en ce que**
l'arbre d'entrée de la transmission est monté dans une partie de carter de la transmission, en particulier dans une cuvette de palier,
en particulier la partie de carter étant orientée sur une autre partie de carter de la transmission au moyen d'un collet de centrage (21, 31) et étant reliée à cette autre partie de carter.

8. Motoréducteur comportant un dispositif de refroidissement selon l'une des revendications 6 et 7,
**caractérisé en ce que**
la transmission sommatrice (171) comprend une roue centrale (62), en particulier une partie de denture, en particulier une roue droite, laquelle est disposée de manière solidaire en rotation sur l'arbre d'entrée de la transmission,
une denture étant réalisée sur chaque arbre de rotor ou sur chaque arbre de rotor une partie dentée, en particulier un pignon, étant relié(e) par une denture de manière solidaire en rotation à l'arbre de rotor,
les pignons s'engrenant avec la roue centrale (62).

9. Motoréducteur comportant un dispositif de refroidissement selon l'une des revendications 6 à 8,
**caractérisé en ce que**
la bride d'adaptateur (10) forme un carter pour la transmission sommatrice (171).

10. Motoréducteur comportant un dispositif de refroidissement selon l'une des revendications 6 à 9,
**caractérisé en ce que**
la bride d'adaptateur (10), en particulier une paroi de la bride d'adaptateur (10), est construite en deux pièces, de sorte qu'elle comprend une tôle sur laquelle les canaux sont réalisés, en particulier son fraisés, sous forme d'évidement, en particulier sous forme de rainure.

11. Motoréducteur comportant un dispositif de refroidissement selon l'une des revendications 6 à 10,
**caractérisé en ce que**
la sortie (4, 20) des moteurs est reliée respectivement de manière étanche à une entrée (5, 30) réalisée sur la bride d'adaptateur (10) vers un canal (40) respectivement à une entrée (5, 30) réalisée à partir de la tôle de la bride d'adaptateur (10),
en particulier l'entrée (5, 30) étant l'embouchure d'un canal respectif parmi les canaux.

12. Motoréducteur comportant un dispositif de refroidissement selon l'une des revendications 6 à 11,
**caractérisé en ce que**
les moteurs, respectivement les dentures de pignon disposées sur les arbres de rotor des moteurs, sont disposé(e)s de manière espacée régulièrement les un(e)s des autres dans la direction périphérique de l'arbre d'entrée de transmission.

13. Motoréducteur comportant un dispositif de refroidissement selon l'une des revendications 6 à 12,
**caractérisé en ce**
**qu'**un pignon (51, 53, 63, 67) relié de manière solidaire en rotation sur l'arbre de rotor d'un moteur n'est monté que par le biais des deux paliers de l'arbre de rotor.

14. Motoréducteur comportant un dispositif de refroidissement selon l'une des revendications 6 à 13,
**caractérisé en ce que**
la roue centrale (62) est montée avec l'arbre d'entrée de transmission dans une partie de carter, en particulier une cuvette de palier, de la transmission.

15. Motoréducteur comportant un dispositif de refroidissement selon l'une des revendications 6 à 14,
**caractérisé en ce que**
la bride d'adaptateur (10) comprend un moyen de centrage (32), lequel peut être orienté sur un moyen de centrage (32), en particulier un collet de centrage (21, 31), de la partie de carter de transmission, en particulier de la cuvette de palier, en particulier la bride d'adaptateur (10) et la cuvette de palier étant reliées de manière amovible, en particulier étant reliées par vissage.

16. Motoréducteur comportant un dispositif de refroidissement selon l'une des revendications 6 à 15,
**caractérisé en ce**
**qu'**un logement, en particulier une ouverture de logement, est disposé(e) au niveau de la bride d'adaptateur (10) lequel/laquelle comprend un moyen de centrage (32), en particulier un collet de centrage (21, 31), sur lequel le flasque d'un moteur est orienté.

17. Motoréducteur comportant un dispositif de refroidissement selon l'une des revendications 6 à 16,
**caractérisé en ce que**
les moteurs sont des moteurs synchrones ou comprennent au moins des aimants permanents, en particulier entre trois et huit moteurs étant disposés dans la direction périphérique, en particulier suivant un espacement régulier dans la direction périphérique.

18. Motoréducteur comportant un dispositif de refroidissement selon l'une des revendications 6 à 17,
**caractérisé en ce que**
des canaux de refroidissement du carter de stator (2) du moteur sont réunis dans le flasque au niveau d'une région d'embouchure commune en tant que sortie (4, 20),
et en particulier dans l'autre flasque du moteur les canaux de refroidissement du carter de stator (2) du moteur étant réunis en une région d'embouchure commune comme entrée (5, 30) pour le fluide refroidissement.

19. Motoréducteur comportant un dispositif de refroidissement selon l'une des revendications 6 à 18,
**caractérisé en ce que**
la transmission sommatrice (171) est lubrifiée avec du liquide de refroidissement, par le fait qu'une ouverture traversante, en particulier un canal de liaison, mène de la région spatiale de la transmission sommatrice jusqu'à un canal (40) de la bride d'adaptateur (10).
